# EUROPÄISCHE PATENTSCHRIFT

(11) **EP 1 054 040 B1**
(45) Veröffentlichungstag und Bekanntmachung des Hinweises auf die Patenterteilung: **08.01.2003**
(21) Anmeldenummer: 00810381.4
(22) Anmeldetag: 04.05.2000
(51) Int. Cl.: C09B 29/12, C09B 29/00

(54) **Azofarbstoffe, Verfahren zu deren Herstellung und deren Verwendung zum Färben oder Bedrucken von natürlichen oder synthetischen Materialien**
Azo dyes, process for their preparation and their use for dyeing or printing natural or synthetic materials
Colorants azoiques, procédé pour leur préparation et leur utilisation pour la teinture ou l'impression de matériaux naturels ou synthétiques

(30) Priorität: 10.05.1999 EP 99810414
(43) Veröffentlichungstag der Anmeldung: 22.11.2000
(73) Patentinhaber: Ciba Specialty Chemicals Holding Inc., 4057 Basel (CH)
(72) Erfinder: Bacher, Jean-Pierre, 68220 Buschwiller (FR); Adam, Jean-Marie, 68300 Rosenau (FR)

(56) Entgegenhaltungen:
- DE-A- 2 154 298
- FR-A- 2 320 336

## Beschreibung

Die vorliegende Erfindung betrifft Azofarbstoffe sowie deren Verwendung zum Färben oder Bedrucken von stickstoffhaltigen oder hydroxygruppenhaltigen natürlichen oder synthetischen Materialien, insbesondere synthetischen Polyamidfasermaterialien.

Die der vorliegenden Erfindung zugrunde liegende Aufgabe war es, gelbe oder orangenfärbende Farbstoffe bereitzustellen, welche zum Färben oder Bedrucken von stickstoffhaltigen oder hydroxygruppenhaltigen natürlichen oder synthetischen Fasermaterialien, insbesondere von natürlichen oder vor allem synthetischen Polyamidfasermaterialien, geeignet sind, gute Echtheitseigenschaften sowie insbesondere gute Lichtechtheit, gute Löslichkeit und gute Druckpastenstabilität und gute Kombinierbarkeit mit roten und blauen Farbstoffen in Trichromiefärbeverfahren aufweisen.

Es wurde nun gefunden, dass die nachstehenden Farbstoffe diesen Anforderungen weitgehend genügen.

Gegenstand der vorliegenden Erfindung ist somit ein Verfahren zum Färben oder Bedrucken von hydroxylgruppenhaltigen oder stickstoffhaltigen Fasermaterialien, dadurch gekennzeichnet, dass man einen oder mehrere Farbstoffe der Formel (1) 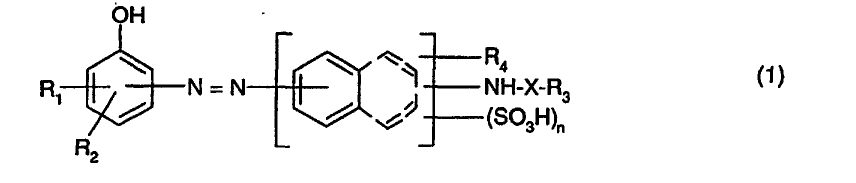 verwendet, worin
R₁ Wasserstoff, Halogen, C₁-C₈-Alkyl, -NH-CO-C₁-C₄-Alkyl oder Phenyl,
R₂ Wasserstoff, Halogen, C₁-C₈-Alkyl, C₁-C₈-Alkoxy, -NH-CO-C₁-C₄-Alkyl oder Phenyl,
R₃ Wasserstoff, C₁-C₈-Alkyl oder Phenyl,
R₄ Wasserstoff, Halogen oder C₁-C₈-Alkyl, und
X -CO-, -COO- oder -SO₂- sind, und
n eine Zahl 1 oder 2 ist.

R₁ als C₁-C₈-Alkyl ist z.B. Methyl, Ethyl, n-Propyl, iso-Propyl, n-Butyl, iso-Butyl, sec.-Butyl, tert.-Butyl, Pentyl, Hexyl, Heptyl und Octyl.
R₂ als C₁-C₈-Alkyl ist z.B. Methyl, Ethyl, n-Propyl, iso-Propyl, n-Butyl, iso-Butyl, sec.-Butyl, tert.-Butyl, Pentyl, Hexyl, Heptyl und Octyl.
R₃ als C₁-C₈-Alkyl ist z.B. Methyl, Ethyl, n-Propyl, iso-Propyl, n-Butyl, iso-Butyl, sec.-Butyl, tert.-Butyl, Pentyl, Hexyl, Heptyl und Octyl.
R₄ als C₁-C₈-Alkyl ist z.B. Methyl, Ethyl, n-Propyl, iso-Propyl, n-Butyl, iso-Butyl, sec.-Butyl, tert.-Butyl, Pentyl, Hexyl, Heptyl und Octyl.

R₂ als C₁-C₈-Alkoxy ist z.B. Methoxy, Ethoxy, Propoxy und Butoxy.

-NH-CO-C₁-C₄-Alkyl ist vorzugsweise -NH-CO-CH₃ und -NH-CO-C₂H₅.

Bevorzugt als X ist -CO-.
Bevorzugt als R₁ ist tert.-Butyl und Methyl.
Bevorzugt als R₂ ist -C(CH₃)₂CH₂CH₃, -C(CH₃)₂CH₂C(CH₃)₃ und tert.-Butyl
Bevorzugt als R₃ ist Ethyl und Methyl.
Bevorzugt als R₄ ist Methyl und Wasserstoff.
Ebenfalls bevorzugt als R₁ ist Halogen, insbesondere Chlor.
Ebenfalls bevorzugt als R₂ ist Methoxy und Halogen, insbesondere Chlor.

Besonders bevorzugt als R₁ ist Methyl.
Besonders bevorzugt als R₂ ist tert.-Butyl.
Besonders bevorzugt als R₃ ist Methyl.
Besonders bevorzugt als R₄ ist Wasserstoff.

Der Rest R₁ ist vorzugsweise in ortho-Position zum Hydroxy gebunden.
Der Rest R₂ ist vorzugsweise in para-Position zum Hydroxy gebunden.
Die Azobrücke ist vorzugsweise in ortho-Position zum Hydroxy gebunden.
Der Rest -NH-X-R₃ ist vorzugsweise in para-Position zu der Azobrücke gebunden.

n ist bevorzugt die Zahl 1.

Von den Farbstoffen der Formel (1) werden bevorzugt Farbstoffe der Formel 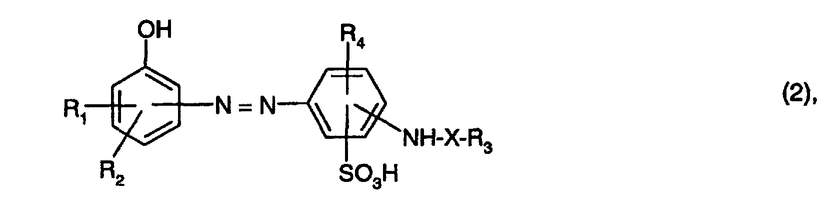 verwendet, worin
R₁, R₂, R₃, R₄ und X die vorderhand unter der Formel (1) angegebenen Bedeutungen und Bevorzugungen haben.

Besonders bevorzugt werden Farbstoffe der Formel (3) verwendet Diese Farbstoffe sind neu. Einen weiteren Gegenstand der Erfindung stellen somit Farbstoffe der Formel 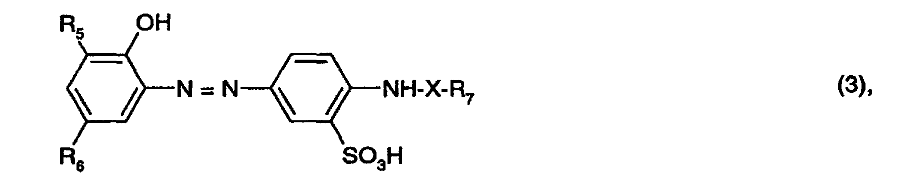 dar, worin
R₅ Wasserstoff, Methyl, tert. Butyl oder Chlor,
R₆ Methyl, tert.-Butyl, -C(CH₃)₂CH₂CH₃, -C(CH₃)₂CH₂C(CH₃)₃, Methoxy, Chlor oder Phenyl,
R₇ Methyl, und
X -CO-
sind.

Ganz besonders bevorzugt unter den Farbstoffen der Formel (1) sind Farbstoffe der Formeln 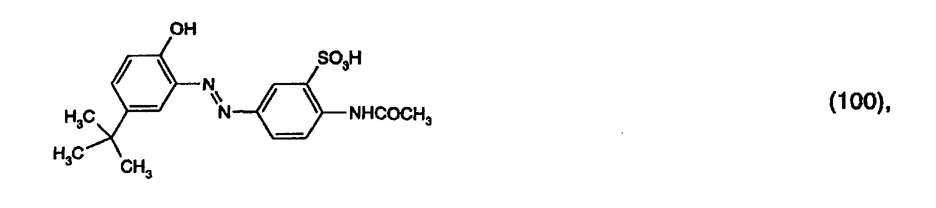 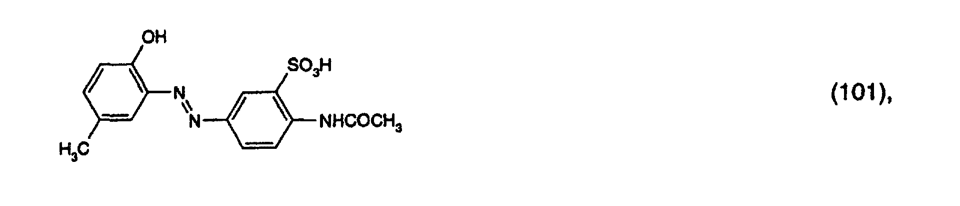 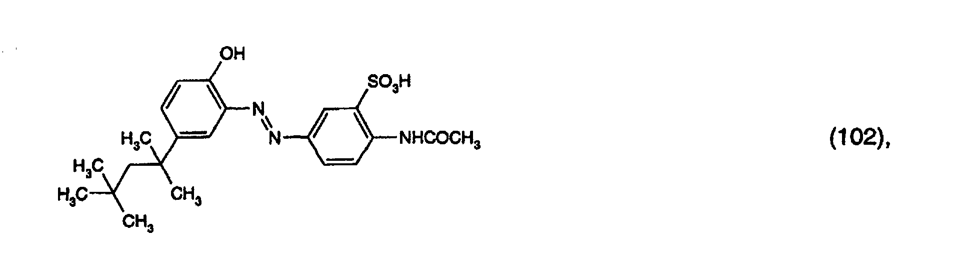 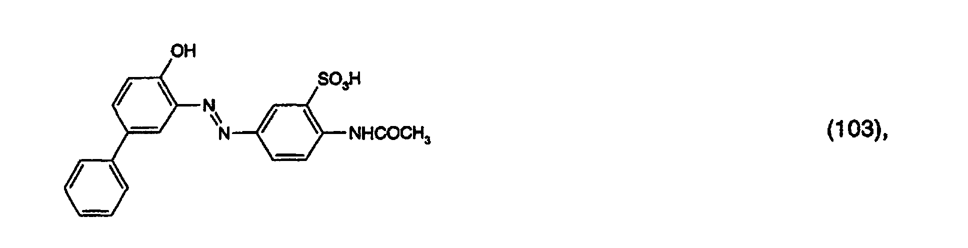 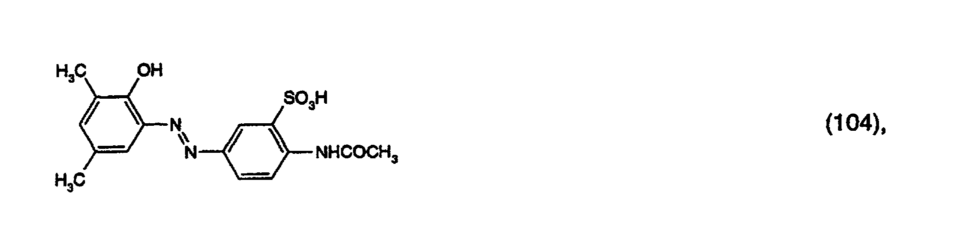 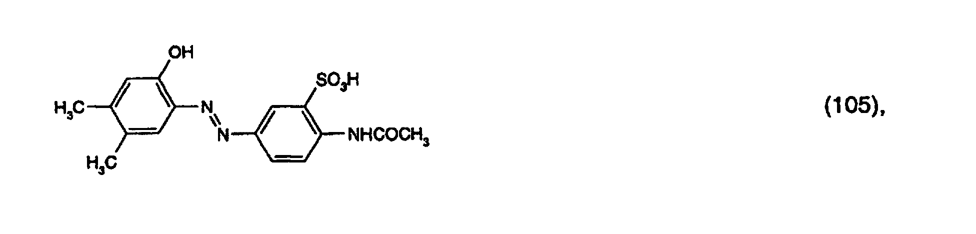 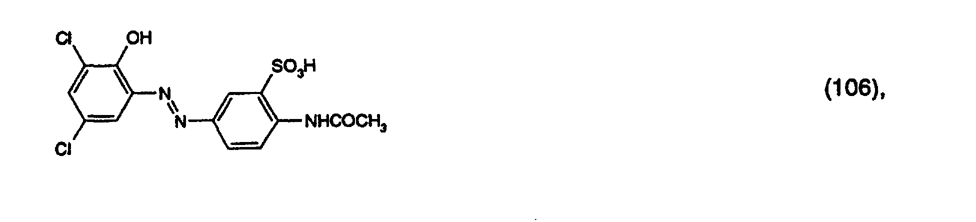 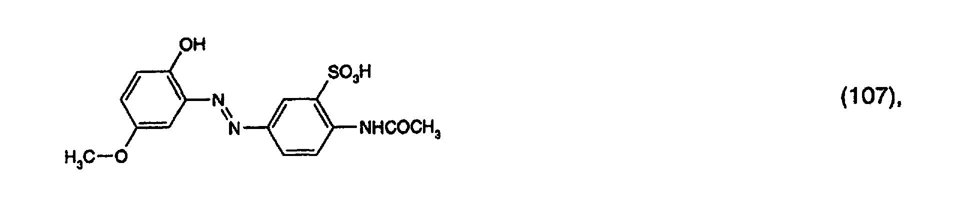 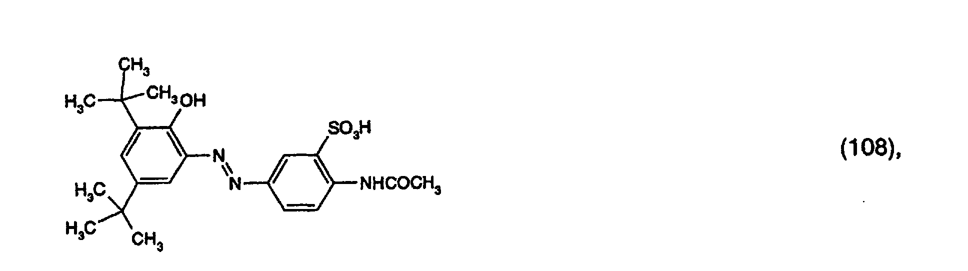 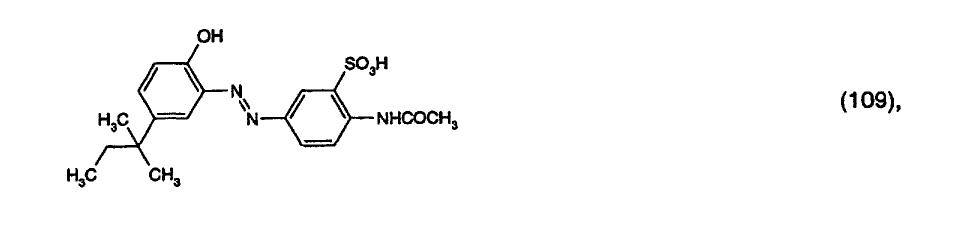 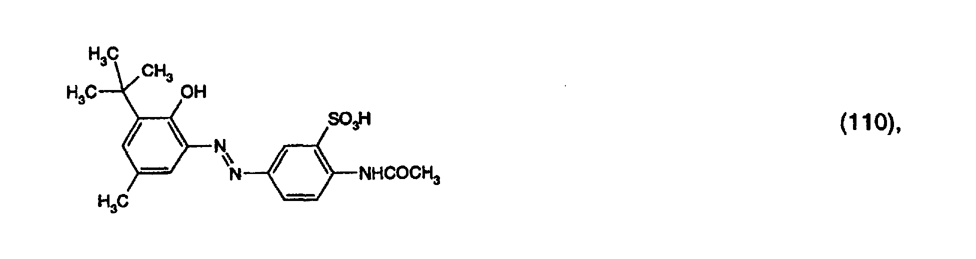 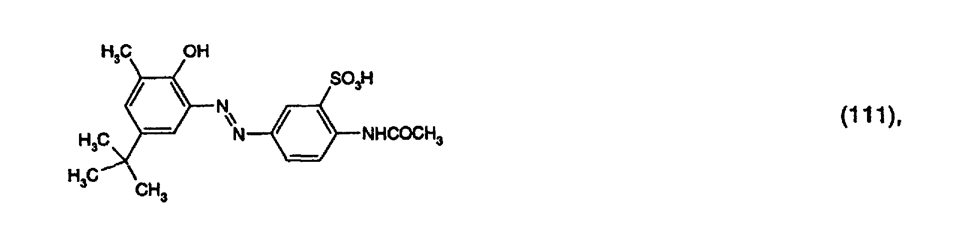 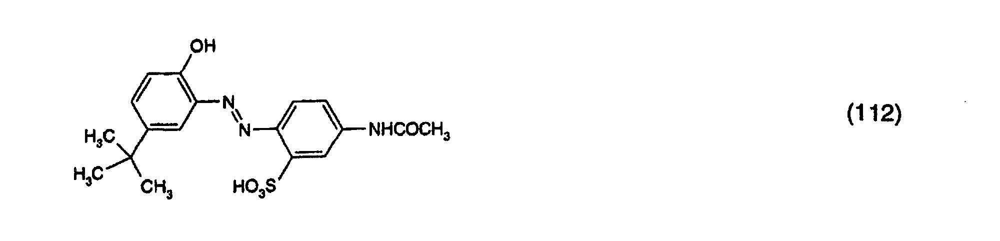 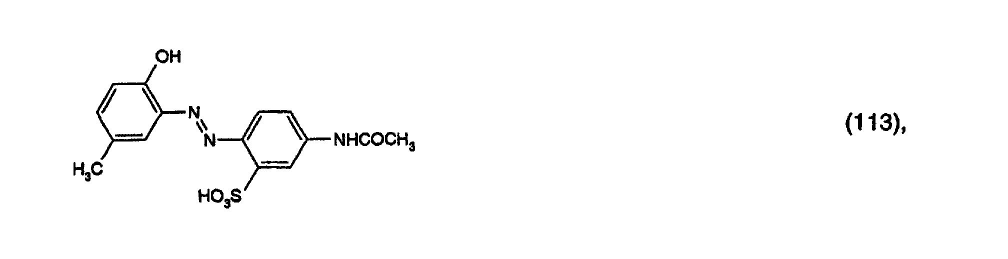 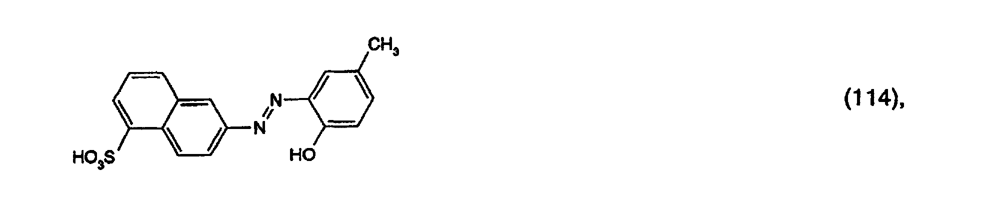 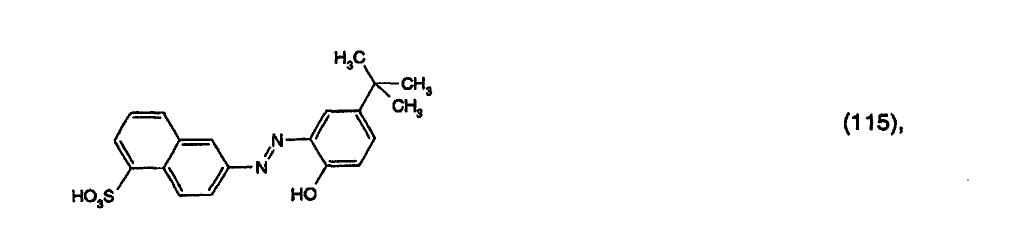 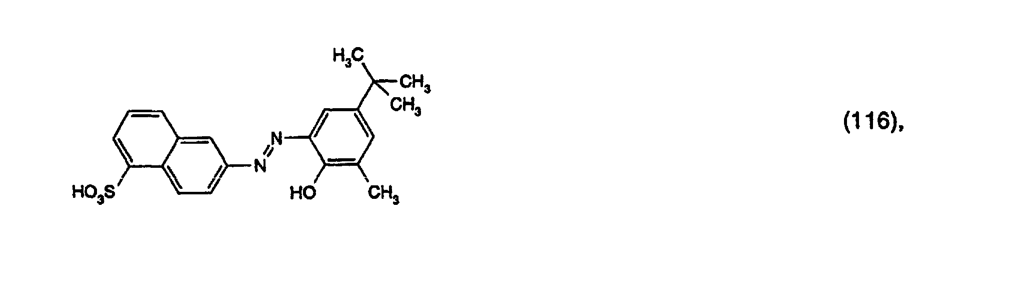 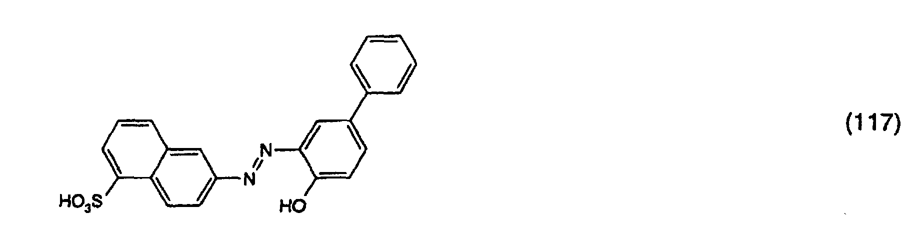 und

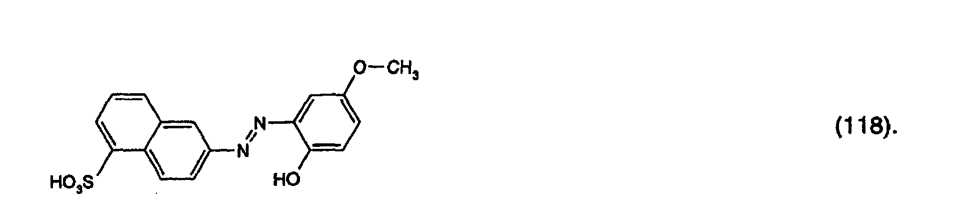

Unter den oben angegebenen Farbstoffen ist der Farbstoff der Formel (111) besonders wichtig.

Die Farbstoffe der Formeln (1), (2) und (3) können als freie Säure oder vorzugsweise in Form von Salzen, z.B. als Li-, Na-, K-, NH₄-, Triethanolamin- oder Triisopropanolamin-Salze, oder als Salze mit einem Kation welches durch Umsetzung von Triethanolamin mit Ethylenoxid und/oder Propylenoxyd erhalten wird,
verwendet werden.

Die Farbstoffe der Formeln (1) und (2) können z.B. erhalten werden, indem man eine Verbindung der Formel 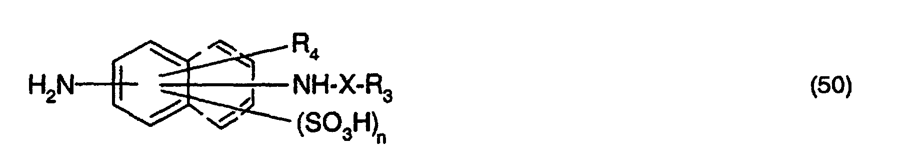 oder der Formel 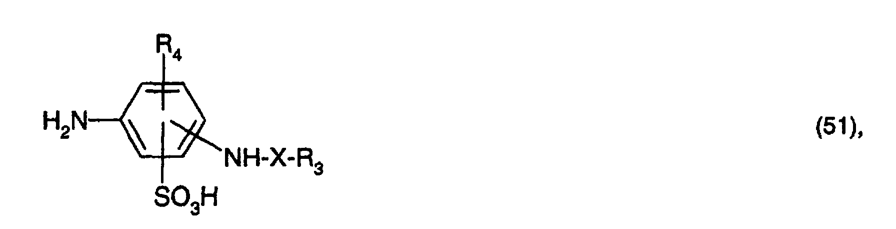 worin
R₃, R₄ und X die unter der Formel (1) angegebenen Bedeutungen haben, in saurem pH-Bereich diazotiert und anschliessend mit einer Verbindung der Formel 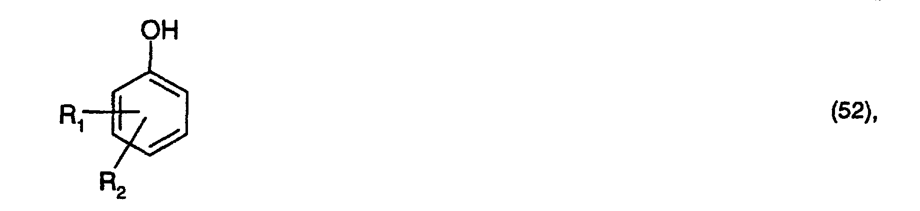 worin
R₁ und R₂ die unter der Formel (1) angegebenen Bedeutungen haben,
und einer wässrigen Natriumhydroxidlösung bei einem pH-Wert zwischen 8 und 12, vorteilhafterweise zwischen 9,5 und 10,5 umsetzt.

Die Verbindungen der Formeln (50) bis (52) sind bekannt oder können nach allgemein bekannten Methoden hergestellt werden.

Gegenstand der vorliegenden Erfindung sind ferner konzentrierte wässrige Lösungen von Farbstoffen, dadurch gekennzeichnet, dass sie 5 bis 50 Gew.-%, insbesondere 10 bis 50 Gew.-% und vorzugsweise 20 bis 50 Gew.-%, bezogen auf das Gesamtgewicht der Lösung, eines Farbstoffes der Formel (1), enthalten.
Die Farbstoffe können in diesen konzentrierten wässrigen Lösungen entweder als freie Säure oder als die vorderhand beschriebenen Salze vorliegen.

Die erfindungsgemässen konzentrierten wässrigen Lösungen können weitere Zusätze, wie z.B. Harnstoff, Caprolactam oder Polyethylenglykol, enthalten. Femer können die erfindungsgemässen konzentrierten wässrigen Lösungen noch Pilz- und/oder Bakterienwachstum hemmende Stoffe enthalten.

Die erfindungsgemässen Farbstofflösungen weisen ferner eine gute Hartwasserbeständigkeit auf und sie lassen sich mit Wasser in beliebigem Verhältnis verdünnen, etwa bei der Herstellung der Färbeflotte, ohne das die gelösten Farbstoffe ausfallen.

Die erfindungsgemässen Farbstoffe der Formel (1) können in den üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und ölabweisende Mittel sowie wasserenthärtende Mittel und natürliche oder synthetische Verdicker, wie z.B. Alginate und Celluloseäther, enthalten.

Die erfindungsgemässen Farbstoffe der Formel (1) sind auch zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffe der Formel (1) zeichnen sich insbesondere durch gutes Aufziehverhalten, gute Löslichkeit und Druckpastenstabilität sowie durch gute Kombinierbarkeit aus. Weiterhin weisen die erfindungsgemässen Farbstofflösungen eine gute Lagerstabilität auf, wobei z.B. deren konzentrierte Lösungen bei einer Temperatur von -5 bis +40°C mehrere Monate lagestabil sind.

Es werden egale Färbungen mit guten Allgemeinechtheiten, insbesondere guter Reib-, Nass-, Nassreib- und Lichtechtheit erhalten.

Die erfindungsgemässen Farbstoffe der Formel (1) eignen sich insbesondere zum Färben oder Bedrucken von hydroxylgruppenhaltigen oder stickstoffhaltigen Fasermaterialien. Besondere Eignung finden sie zum Färben oder Bedrucken von synthetischen Polyamidmaterialien, wie z.B. Polyamid 6 oder Polyamid 6.6, oder von Seide und sind auch geeignet zum Färben oder Bedrucken von Mischgeweben oder -Garnen aus Wolle und synthetischem Polyamid.
Das genannte Material, insbesondere Textilmaterial, kann dabei in den verschiedensten Verarbeitungsformen vorliegen, wie z.B. als Faser, Garn, Gewebe oder Gewirke und insbesondere in Form von Teppichen.

Die nachfolgenden Beispiele dienen zur Erläuterung der Erfindung. Darin sind die Temperaturen in Celsiusgraden angegeben, Teile sind Gewichtsteile und die Prozentangaben beziehen sich auf Gewichtsprozente, sofern nicht anders vermerkt. Gewichtsteile stehen zu Volumenteilen im Verhältnis von Gramm zu Kubikzentimeter.

### Beispiel 1:

5 Teile 4-Aminoacetanilid-2-sulfonsäure ä 91.5% werden in 50 Teilen 1 normaler Salzsäure bei 10°C vorgelegt. Zur leicht violett gefärbten Suspension tropft man innerhalb von 10 Minuten 5 Teile einer 4 normalen wässrigen Natriumnitrit-Lösung. Man rührt 2 Stunden bei 5 bis 10°C.
Die erhaltene Suspension wird innerhalb von 30 Minuten, bei einer Temperatur von 20-25°C, einer Lösung bestehend aus 3 Teilen 4-tert.-Butylphenol, 10 Teilen einer wässrigen 2N Natriumhydroxid-Lösung und 150 Teilen Wasser zudosiert. Während des Zudosierens wird der pH durch Zugabe einer wässrigen, 2 normalen Natriumhydroxid-Lösung bei einem Wert von 10 gehalten. Die entstandene gelbe Suspension wird 2 Stunden bei einer Temperatur von 20-25°C und einem pH-Wert von 10 nachgerührt und abfiltriert. Das Produkt wird mit 100 Teilen Wasser gewaschen und im Vacuum bei 70°C getrocknet. Man erhält 7.1 Teile einer Verbindung der Formel

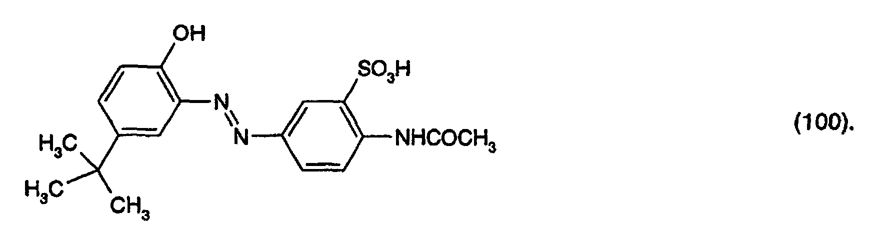

In analoger Weise können die in der folgenden Tabelle 1 angegebenen Verbindungen hergestellt werden:

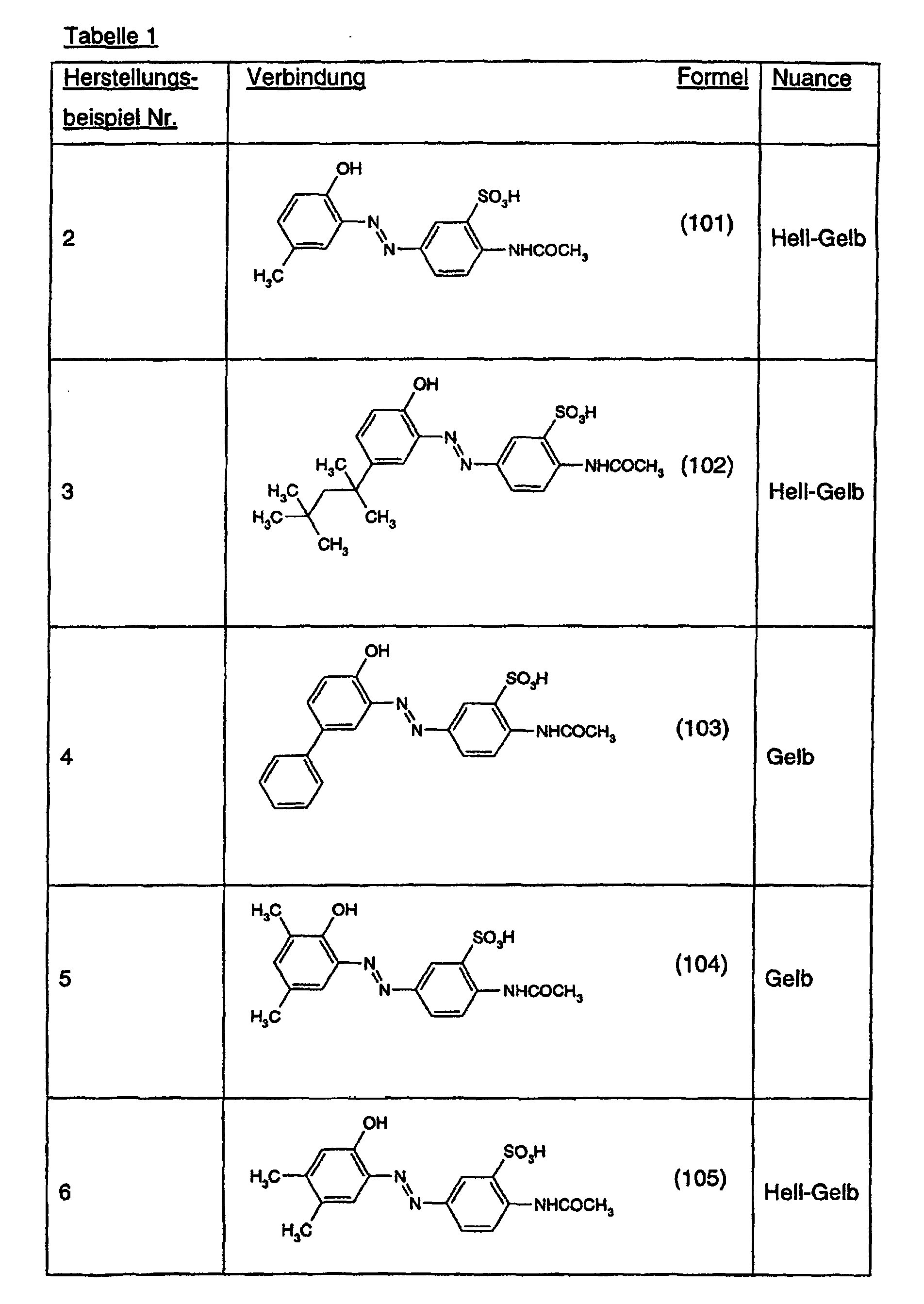

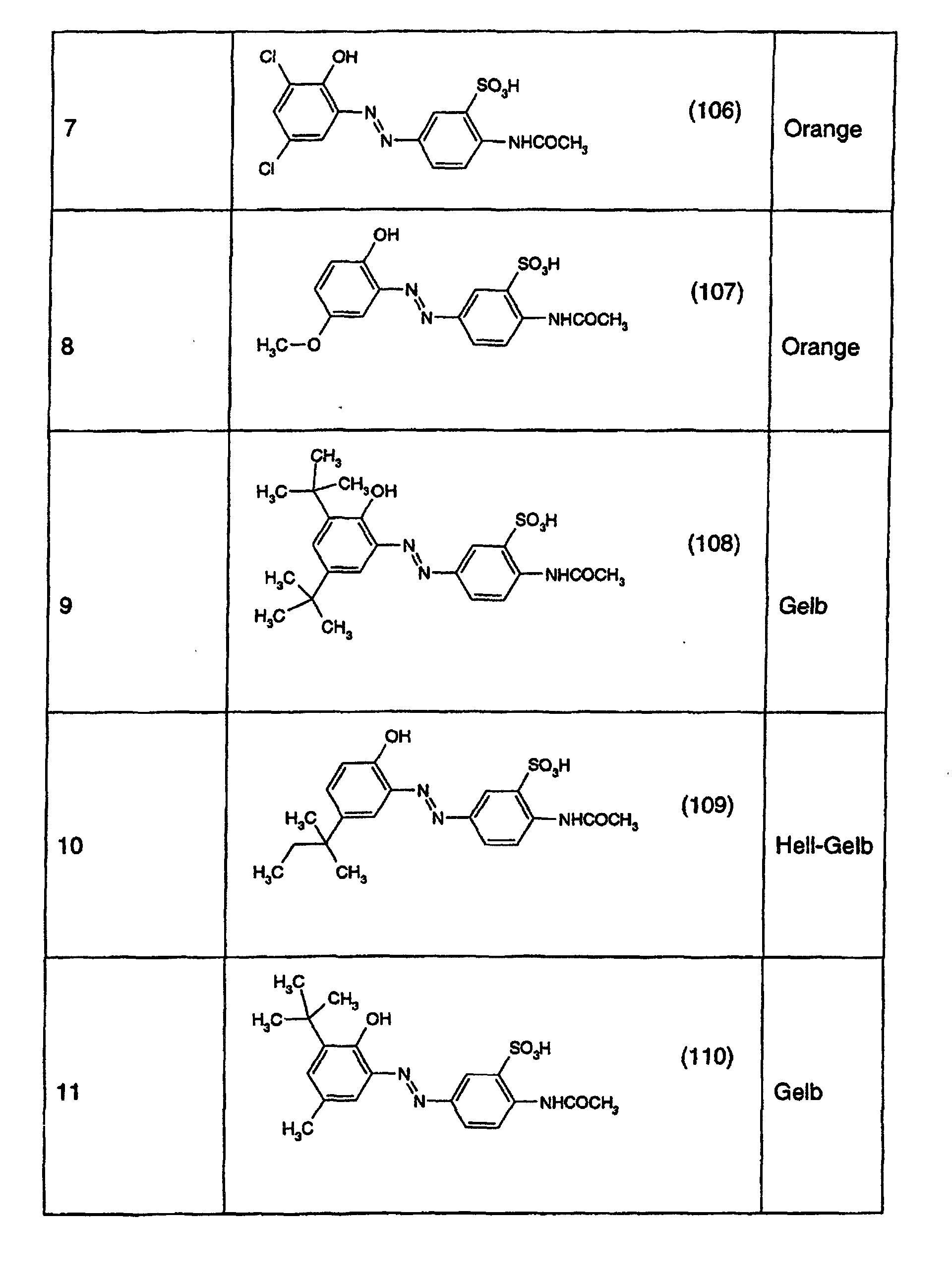

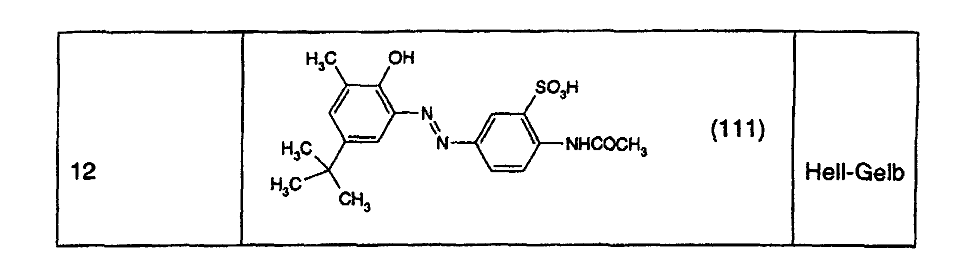

### Beispiel 13:

Verfährt man wie in Beispiel 1 angegeben, verwendet jedoch anstelle von 5 Teilen 4-Aminoacetanilid-2-sulfonsäure, eine äquimolare Menge von 4-Aminoacetanilid-3-sulfonsäure, so erhält man die Verbindung der Formel

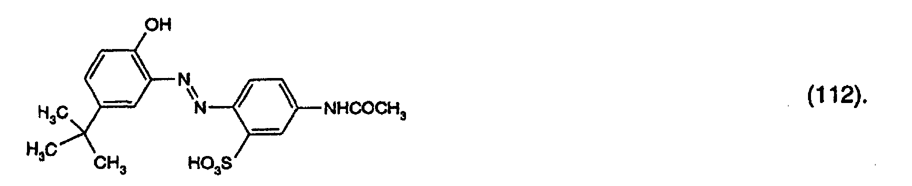

### Beispiel 14:

Verfährt man wie in Beispiel 1 angegeben, verwendet jedoch anstelle von 5 Teilen 4-Aminoacetanilid-2-sulfonsäure, eine äquimolare Menge von 4-Aminoacetanilid-3-sulfonsäure und anstelle von 3 Teilen 4-tert.-Butylphenol, eine äquimolare Menge p-Kresol, so erhält man die Verbindung der Formel

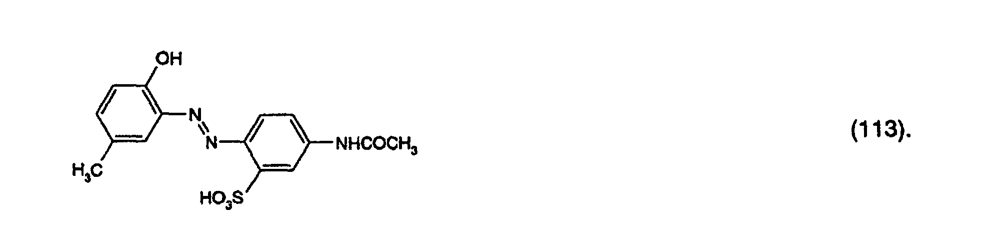

### Beispiel 15:

5 Teile 2-Amino-5-Naphthalinsulfonsäure ä 95.5% werden in 50 Teilen 1 normaler Salzsäure bei 10°C vorgelegt. Zur leicht violett gefärbten Suspension tropft man innerhalb von 10 Minuten 5 Teile einer 4 normalen wässrigen Natriumnitrit-Lösung. Man rührt 2 Stunden bei 5 bis 10°C.

Die erhaltene Suspension wird innerhalb von 30 Minuten, bei einer Temperatur von 20-25°C, einer Lösung bestehend aus 3 Teilen 4-tert.-Butylphenol, 10 Teilen einer wässrigen 2N Natriumhydroxid-Lösung und 150 Teilen Wasser zudosiert. Während des Zudosierens wird der pH durch Zugabe einer wässrigen, 2 normalen Natriumhydroxid-Lösung bei einem Wert von 10 gehalten. Die entstandene gelbe Suspension wird 2 Stunden bei einer Temperatur von 20-25°C und einem pH-Wert von 10 nachgerührt und abfiltriert. Das Produkt wird mit 100 Teilen Wasser gewaschen und im Vacuum bei 70°C getrocknet. Man erhält 7.1 Teile einer Verbindung der Formel

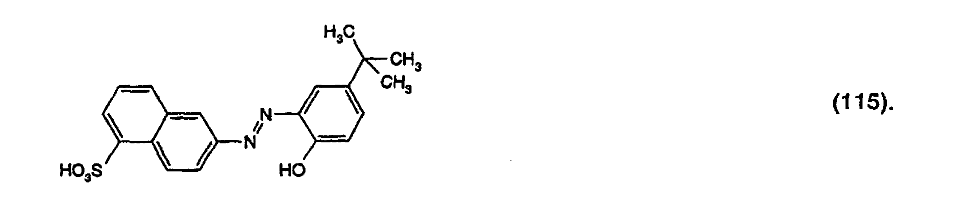

In analoger Weise können die in der folgenden Tabelle 2 angegebenen Verbindungen hergestellt werden:

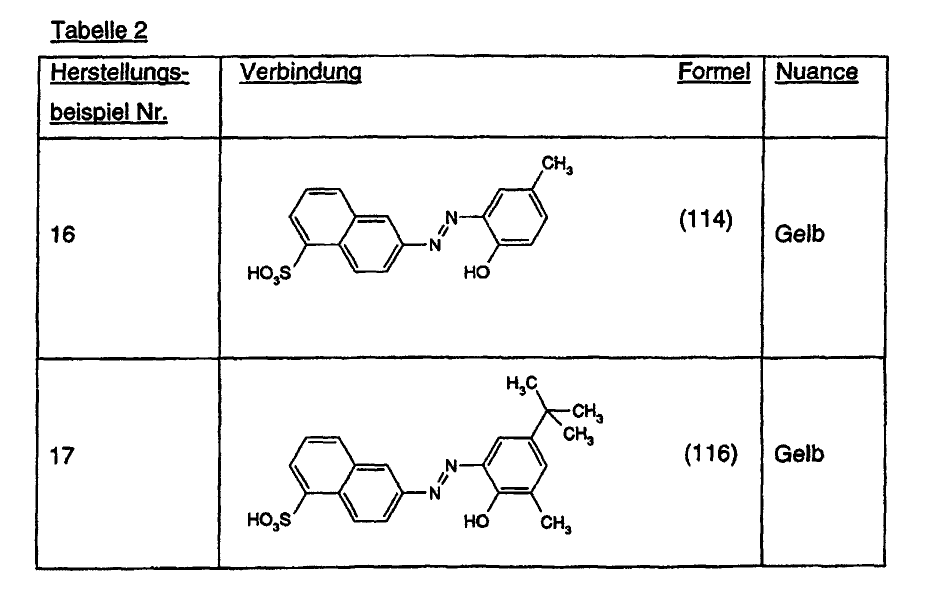

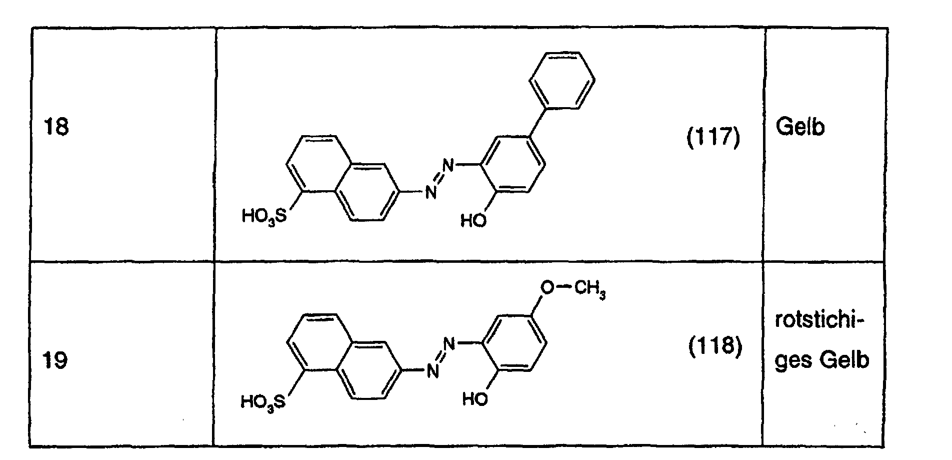

### Färbebeispiel 1:

Zu 2000 Gewichtsteilen entmineralisiertem Wasser wird bei Raumtemperatur 1 Gewichtsteil eines Egalisierhilfsmittels (basierend auf dem Kondensationsprodukt aus einem höheren aliphatischen Amin und Ethylenoxid) zugegeben. Anschliessend wird das Bad mit 4 Gewichtsteilen Natriumdihydrogenphosphat und 0,6 Gewichtsteilen Dinatriumhydrogen-phosphat auf einen pH-Wert von 6 gestellt. Dann gibt man
0,10 Gewichtsteile des Farbstoffes gemäss Beispiel 12, der in Form der freien Säure der Verbindung der Formel 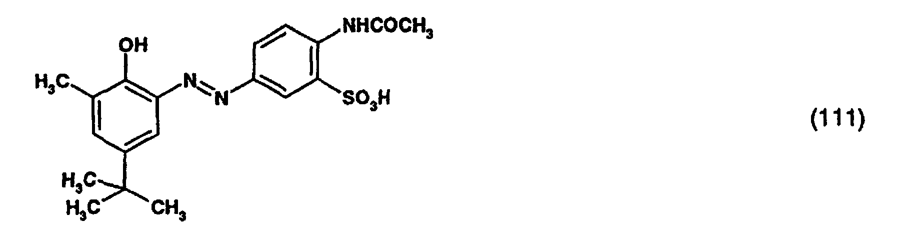 entspricht,
0,06 Teile eines Farbstoffes der in Form der freien Säure der Verbindung der Formel 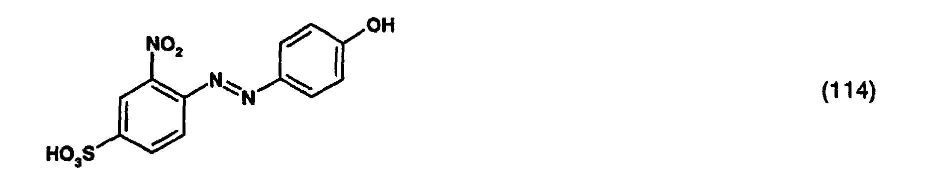 entspricht,
0,02 Teile eines Farbstoffes der in Form der freien Säure der Verbindung der Formel 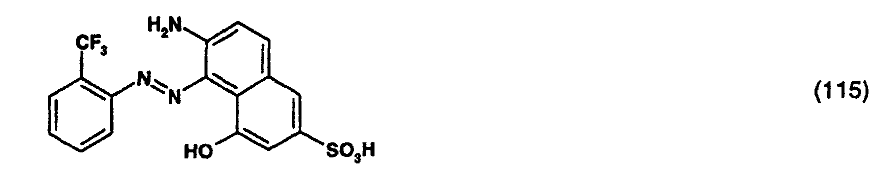 entspricht,
0,04 Teile eines Farbstoffes der in Form der freien Säure der Verbindung der Formel 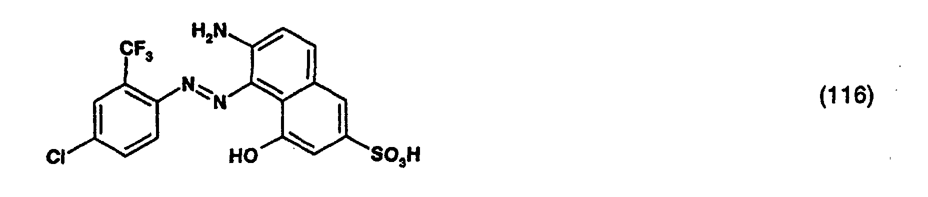 entspricht,
0,03 Teile eines Farbstoffes der in Form der freien Säure der Verbindung der Formel 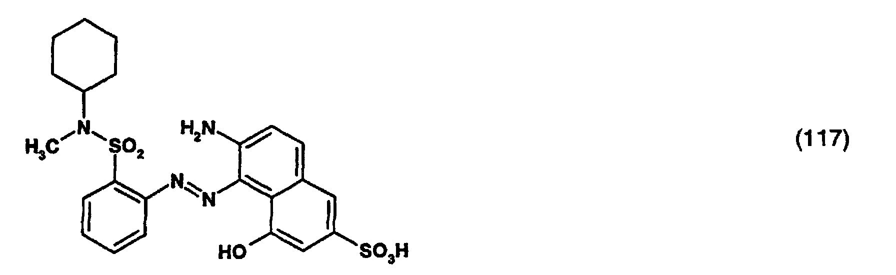 entspricht, und
0,13 Teile eines Farbstoffes der in Form der freien Säure der Verbindung der Formel 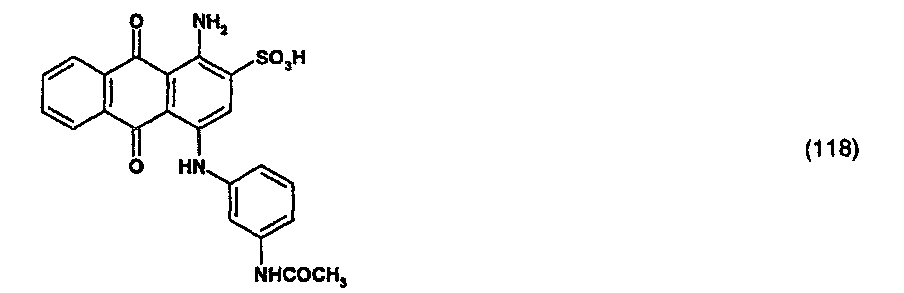 entspricht, zu.

In die erhaltene Farbstofflösung geht man mit 100 Teilen Polyamid-6,6 Fasermaterial (Helancatrikot) ein und erwärmt das Färbebad innerhalb von 45 Minuten auf eine Tempereatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

### Färbebeispiel 2:

Zu 2000 Gewichtsteilen entmineralisiertem Wasser wird bei Raumtemperatur 1 Gewichtsteil eines Egalisierhilfsmittels (basierend auf dem Kondensationsprodukt aus einem höheren aliphatischen Amin und Ethylenoxid) zugegeben. Anschliessend wird das Bad mit 4 Gewichtsteilen Natriumdihydrogenphosphat und 0,6 Gewichtsteilen Dinatriumhydrogen-phosphat auf einen pH-Wert von 6 gestellt. Dann gibt man 0,60 Gewichtsteile des Farbstoffes gemäss Beispiel 12, der in Form der freien Säure der Verbindung der Formel 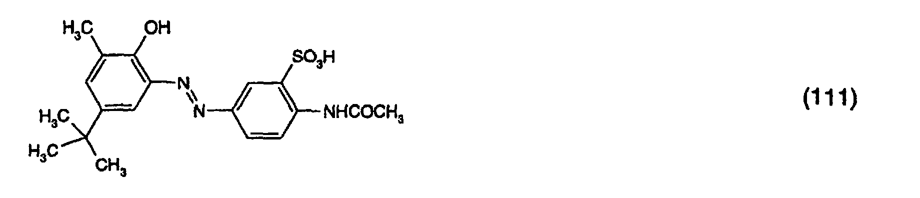 entspricht, zu.
In die erhaltene Farbstofflösung geht man mit 100 Teilen Polyamid-6,6 Fasermaterial (Helancatrikot) ein und erwärmt das Färbebad innerhalb von 45 Minuten auf eine Tempereatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem zitronengelben Farbton gefärbtes Gewebe.

## Patentansprüche

1. Farbstoffe der Formel 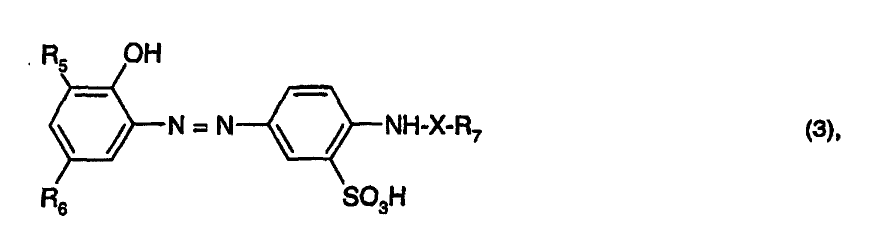 worin
R₅ Wasserstoff, Methyl, tert. Butyl oder Chlor,
R₆ Methyl, tert.-Butyl, -C(CH₃)₂CH₂CH₃, -C(CH₃)₂CH₂C(CH₃)₃, Methoxy, Chlor oder Phenyl,
R₇ Methyl, und
X-CO-
sind.

2. Farbstoff gemäss Anspruch 1 der Formel

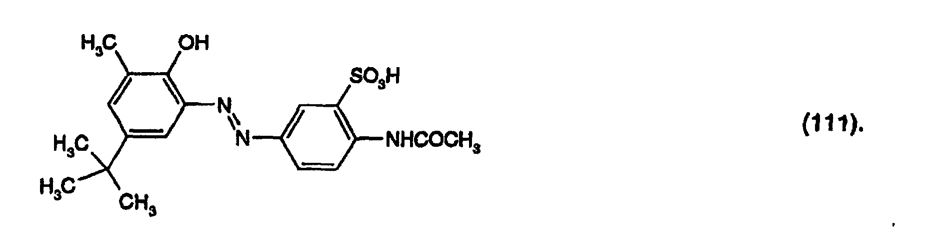

3. Verfahren zur Herstellung der Farbstoffe der Formel (3) gemäss Anspruch 1, **dadurch gekennzeichnet, dass** man eine Verbindung der Formel 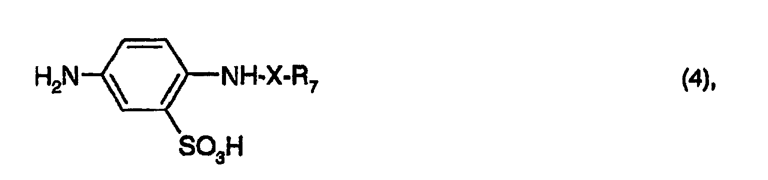 worin
R₇ und X die unter der Formel (3) angegebenen Bedeutungen haben, in saurem pH-Bereich nitriert und anschliessend mit einer Verbindung der Formel 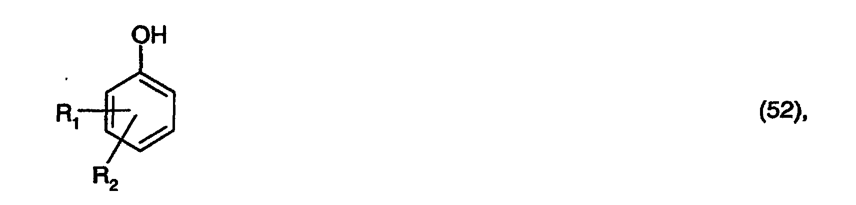 worin
R₁ und R₂ die unter der Formel (3) angegebenen Bedeutungen haben,
und einer wässrigen Natriumhydroxidlösung bei einem pH-Wert zwischen 8 und 12, vorteilhafterweise zwischen 9,5 und 10,5 umsetzt.

4. Konzentrierte wässrige Lösungen von Farbstoffen, **dadurch gekennzeichnet, dass** sie 5 bis 50 Gew.-%, bezogen auf das Gesamtgewicht der Lösung, eines Farbstoffes der Formel (3) gemäss Anspruch 1 enthalten.

5. Konzentrierte wässrige Lösungen von Farbstoffen, **dadurch gekennzeichnet, dass** sie 5 bis 50 Gew.-%, bezogen auf das Gesamtgewicht der Lösung, eines Farbstoffes der Formel (111) gemäss Anspruch 2 enthalten.

6. Verfahren zum Färben oder Bedrucken von hydroxylgruppenhaitigen oder stickstoffhaltigen Fasermaterialien, **dadurch gekennzeichnet, dass** man einen oder mehrere Farbstoffe der Formel (1) 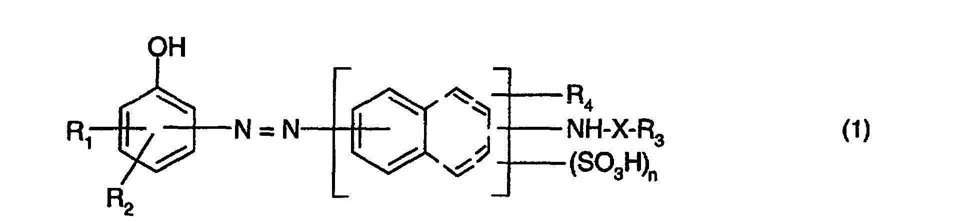 verwendet, worin
R₁ Wasserstoff, Halogen, C₁-C₈-Alkyl, -NH-CO-C₁-C₄-Alkyl oder Phenyl,
R₂ Wasserstoff, Halogen, C₁-C₈-Alkyl, C₁-C₈-Alkoxy, -NH-CO-C₁-C₄-Alkyl oder Phenyl,
R₃ Wasserstoff, C₁-C₈-Alkyl oder Phenyl,
R₄ Wasserstoff, Halogen oder C₁-C₈-Alkyl, und
X -CO-, -COO- oder -SO₂- sind, und
n eine Zahl 1 oder 2 ist.

7. Verwendung der Farbstoffe der Formel (1) gemäss Anspruch 6 zum Färben oder Bedrucken von hydroxylgruppenhaltigen oder stickstoffhaltigen Fasermaterialien.

8. Verwendung gemäss Anspruch 7 zum Färben oder Bedrucken von synthetischen Polyamidfasermaterialien.

9. Die mit den Farbstoffen gemäss Anspruch 6 gefärbten oder bedruckten hydroxylgruppenhaltigen oder stickstoffhaltigen Fasermaterialien.

## Claims

1. A dye of formula 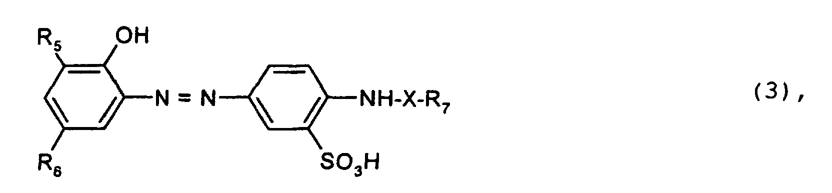 wherein
R₅ is hydrogen, methyl, tert-butyl or chloro,
R₆ is methyl, tert-butyl, -C(CH₃)₂CH₂CH₃, -C(CH₃)₂CH₂C(CH₃)₃, methoxy, chloro or phenyl,
R₇ is methyl, and
X is -CO-.

2. A dye according to claim 1 of formula

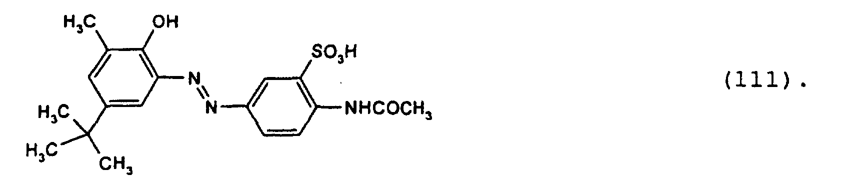

3. A process for the preparation of a dye of formula (3) according to claim 1, which comprises diazotising a compound of formula 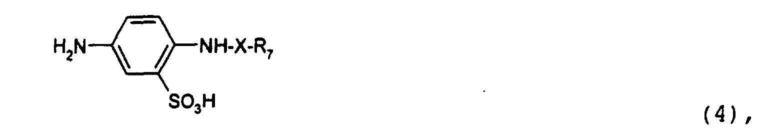 in which
R₇, and X have the meanings given under formula (3) in the acid pH range and then reacting the diazonium compound with a compound of formula 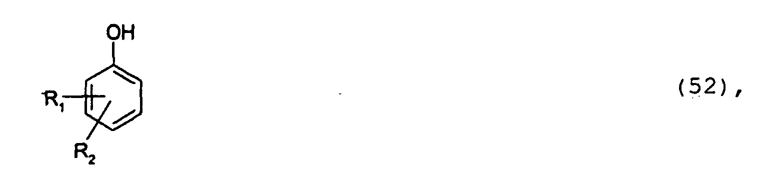 in which
R₁ and R₂ have the meanings given under formula (3), and with an aqueous sodium hydroxide solution at a pH in the range from 8 to 12, advantageously from 9.5 to 10.5.

4. A concentrated aqueous dye solution, which comprises 5 to 50 % by weight, based on the total weight of the solution, of a dye of formula (3) according to claim 1.

5. A concentrated aqueous dye solution, which comprises 5 to 50 % by weight, based on the total weight of the solution, of a dye of formula (111) according to claim 2.

6. A process for dyeing or printing hydroxyl-containing or nitrogen-containing fibre materials, which comprises using one or more than one dye of formula (1) 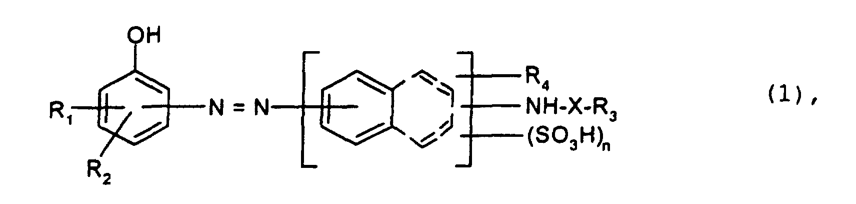 in which
R₁ is hydrogen, halogen, C₁-C₈alkyl, -NH-CO-C₁-C₄alkyl or phenyl,
R₂ is hydrogen, halogen, C₁-C₈alkyl, C₁-C₈alkoxy, -NH- CO-C₁-C₄alkyl or phenyl,
R₃ is hydrogen, C₁-C₈alkyl or phenyl,
R₄ is hydrogen, halogen or C₁-C₈alkyl, and
X is -CO-, -COO- or -SO₂- , and
n is the number 1 or 2.

7. Use of the dyes of formula (1) according to claim 6 for dyeing or printing hydroxyl-containing or nitrogen-containing fibre materials.

8. Use according to claim 7 for dyeing or printing synthetic polyamide fibre materials.

9. The hydroxyl-containing or nitrogen-containing fibre materials dyed or printed with the dyes according to claim 6.

## Revendications

1. Colorants de formule 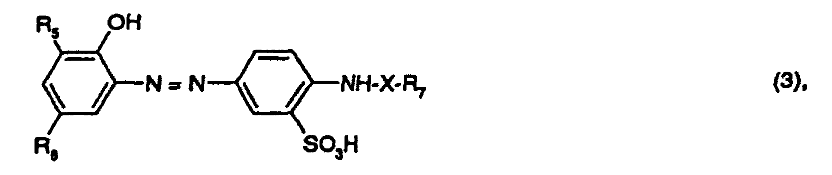 où
R₅ représente un atome d'hydrogène, des groupes méthyle, tert.-butyle ou chloro,
R₆ représente des groupes méthyle, tert.-butyle, -C(CH₃)₂CH₂CH₃, -C(CH₃)₂CH₂C(CH₃)₃, méthoxy, chloro ou phényle,
R₇ représente un groupe méthyle et
X représente un groupe -CO-.

2. Colorant selon la revendication 1 de formule

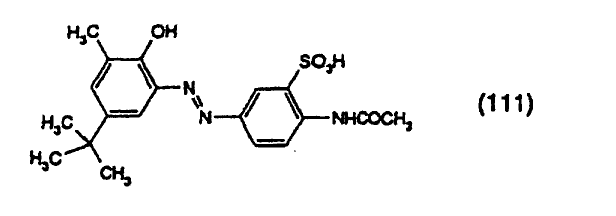

3. Procédé pour la préparation des colorants de formule (3) selon la revendication 1, **caractérisé en ce qu'**on effectue une nitration d'un composé de formule 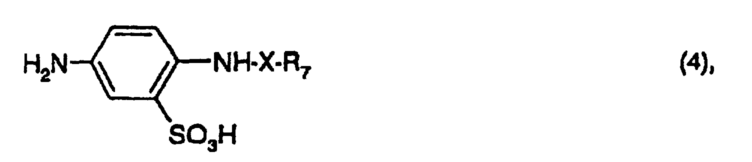 où
R₇ et X possèdent les significations données à la formule (3), dans un domaine de pH acide et ensuite on fait réagir sur un composé de formule 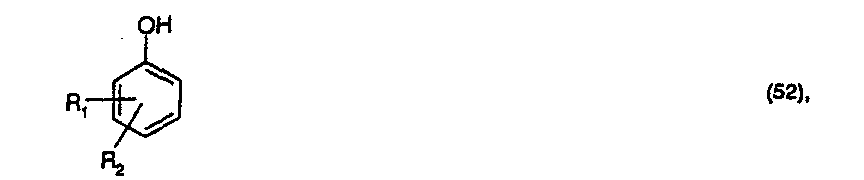 où
R₁ et R₂ possèdent les significations données à la formule (3),
et sur une solution aqueuse d'hydroxyde de sodium à une valeur de pH comprise entre 8 et 12, avantageusement entre 9,5 et 10,5.

4. Solutions de colorants aqueuses, concentrées, **caractérisées en ce qu'**elles présentent une teneur de 5 à 50 % en poids, par rapport au poids total de la solution, en un colorant de formule (3) selon la revendication 1.

5. Solutions de colorants aqueuses, concentrées, **caractérisées en ce qu'**elles présentent une teneur de 5 à 50 % en poids, par rapport au poids total de la solution, en un colorant de formule (111) selon la revendication 2.

6. Procédé pour la teinture ou l'impression de matières fibreuses hydroxylées ou azotées, **caractérisé en ce qu'**on utilise un ou plusieurs colorants de formule (1) 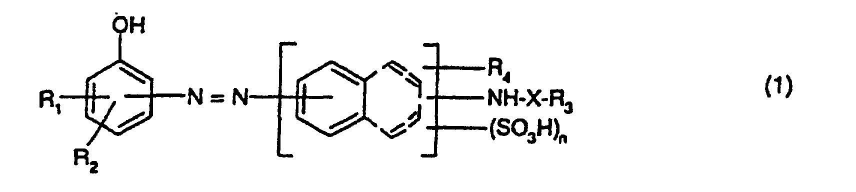 où
R₁ représente un atome d'hydrogène, un atome d'halogène, des groupes alkyle en C₁-C₈, -NH-CO- (alkyle en C₁-C₄) ou phényle,
R₂ représente un atome d'hydrogène, un atome d'halogène, des groupes alkyle en C₁-C₈, alkoxy en C₁-C₈, -NH-CO-(alkyle en C₁-C₄) ou phényle,
R₃ représente un atome d'hydrogène, des groupes alkyle en C₁-C₈ ou phényle,
R₄ représente un atome d'hydrogène, un atome d'halogène ou un groupe alkyle en C₁-C₈,
X représente des groupes -CO-, -COO- ou -SO₂-, et
n vaut 1 ou 2.

7. Utilisation des colorants de formule (1) selon la revendication 6 pour la teinture ou l'impression de matières fibreuses hydroxylées ou azotées.

8. Utilisation selon la revendication 7 pour la teinture ou l'impression de matières fibreuses polyamides synthétiques.

9. Matières fibreuses hydroxylées ou azotées teintes ou imprimées par les colorants selon la revendication 6.
